# EUROPÄISCHE PATENTSCHRIFT

(11) **EP 1 930 643 B1**
(45) Veröffentlichungstag und Bekanntmachung des Hinweises auf die Patenterteilung: **27.05.2015**
(21) Anmeldenummer: 07021518.1
(22) Anmeldetag: 06.11.2007
(51) Int. Cl.: F16L 33/04, F16L 21/06

(54) **Spannbare Schelle**
Tensionable clamp
Etrier extensible

(30) Priorität: 08.12.2006 DE 102006057881
(43) Veröffentlichungstag der Anmeldung: 11.06.2008
(73) Patentinhaber: NORMA Germany GmbH, 63477 Maintal (DE)
(72) Erfinder: Lebo, Goran, 63165 Mühlheim/Main (DE); Henrich, Detlef, 63694 Limeshain (DE); Wolf, Heinz Peter, 63628 Bad Soden-Salmünster (DE); Mann, Stephan, 63599 Bieber (DE)
(74) Vertreter: Patentanwälte Olbricht Buchhold Keulertz

(56) Entgegenhaltungen:
- WO-A1-2006/109001
- DE-A1- 2 919 939
- DE-A1- 19 928 434
- DE-C1- 19 906 946
- DE-U- 7 318 983
- GB-A- 2 153 899
- US-A- 4 463 975
- US-A1- 2006 071 471
- US-B1- 6 199 921
- 'NOS OBJECTIFS, NOS VALEURS' CAILLAU ISSY-LES_MOULINEAUX, Seiten 1 - 6

## Beschreibung

Die Erfindung betrifft eine spannbare Schelle mit einem Schellenband und einem Spannkopf, der zwei in Umfangsrichtung mit einem Abstand zueinander angeordnete Spannbacken aufweist, die durch eine Spanneinrichtung aufeinander zu bewegbar sind, wobei mindestens eine Spannbacke im Bereich ihrer radialen Innenseite mindestens einen in Umfangsrichtung auf die andere Spannbacke vorstehenden Vorsprung aufweist, der in den Abstand hineinragt, wobei der Vorsprung einstückig mit der Spannbacke ausgebildet ist.

Ferner betrifft die Erfindung eine Rohrverbindung mit einem Innenrohr, das in ein Außenrohr eingesteckt ist, und einer Schelle, die auf das Außenrohr gespannt ist, wobei das Außenrohr mindestens zwei von seiner Stirnseite ausgehende Schlitze aufweist.

Eine derartige Schelle und eine derartige Rohrverbindung sind aus US 2006/0071471 A1 bekannt. Die Schelle dient dazu, das Außenrohr zumindest in dem Bereich, der die Schlitze aufweist, auf dem Außenumfang des Innenrohres zu verspannen. Eine derartige Rohrverbindung sollte möglichst dicht sein, insbesondere dann, wenn eine derartige Rohrverbindung in gasführenden Anlagen eingesetzt wird, beispielsweise in Auspuffanlagen. "Dicht" heißt dabei, daß möglichst keine Spalte zwischen dem Innenrohr und dem Außenrohr verbleiben, durch die Gas oder Flüssigkeit entweichen kann.

Der Außendurchmesser des Innenrohres und der Innendurchmesser des Außenrohres sind im Überlappungsbereich der beiden Rohre zwar relativ gut aneinander angepaßt. Allerdings verbleibt in der Regel ein gewisses Spiel, das nicht nur auf Fertigungstoleranzen beruht, sondern auch notwendig ist, um mit vertretbarem Kraftaufwand das Innenrohr in das Außenrohr einstecken zu können.

Wenn die Schelle gespannt wird, d.h. wenn die Spanneinrichtung betätigt wird, um die Spannbacken aufeinander zu zu bewegen, dann wird der Innendurchmesser des Außenrohres vermindert, weil das Außenrohr etwas zusammengezogen wird. Allerdings führt dieses Zusammenziehen, d.h. die Durchmesserverringerung des Schellenbandes, dazu, daß sich das Außenrohr im Bereich zwischen den beiden Spannbacken nach außen aufwölbt. An dieser Stelle bildet sich ein Schlitz, der vielfach dazu führt, daß die Rohrverbindung trotz fest gespannter Schelle undicht wird.

Man hat daher in der eingangs genannten US 2006/0071471 A1 vorgeschlagen, zwischen den beiden Spannbacken ein Zwischenstück anzuordnen, das im Bereich zwischen den beiden Spannbacken auf das Außenrohr drückt und damit verhindern soll, daß sich das Außenrohr aufwölbt. Allerdings ist eine derartige Ausgestaltung ungünstig. Bei der Herstellung einer derartigen Schelle muß ein zusätzliches Element gehandhabt werden. Dieses Element muß vor dem Spannen der Schelle etwa mittig zwischen den beiden Spannbacken angeordnet werden. Dies wiederum führt dazu, dass sich das Zwischenelement nach dem Lösen der Spanneinrichtung nicht mehr automatisch in der richtigen Position befindet, so dass man eine derartige Schelle im Grunde nur einmal verwenden kann. Eine erneute Montage erfordert ein vorheriges Neupositionieren des Zwischenstücks.

Eine weitere Schelle ist aus GB 2 153 899 A bekannt. Diese Schelle weist ein Schellenband auf und einen Spannkopf, der zwei in Umfangsrichtung mit einem Abstand zueinander angeordnete Spannbacken aufweist, die durch eine Spanneinrichtung aufeinander zu bewegbar sind. Das Schellenband setzt sich an einem Ende in einer Brücke fort, die unter das Schellenband im Bereich des anderen Spannkopfes geschoben werden kann, wenn die beiden Spannbacken aufeinander zu bewegt werden.

DE 199 06 946 C1 zeigt eine Steckkupplung mit einer Spannschelle, die ein Schellenband aufweist und einen Spannkopf, der zwei in Umfangsrichtung mit einem Abstand zueinander angeordnete Spannbacken aufweist. Die Spannkacken sind durch eine Spanneinrichtung aufeinander zu bewergbar. Das Schellenband setzt sich in einer Lasche fort, die unter das andere Ende des Schellenbandes geschoben werden kann, wenn die beiden Spannbacken aufeinander zu bewegt werden.

DE 199 28 434 A1 zeigt einen Kanalverbinder, der ein Schel enband aufweist, das an seinen beiden Enden mit spannköpfen versehen ist. Die Spannköpfe sind durch einen Schraubbolzen miteinander verbunden und können durch Anziehen einer Mutter aufeinander zu bewegt werden. Die Spannköpfe sind nicht unmittelbar an den Enden des Schellenbandes angeordnet, sondern das Schellenband ragt eine kleine Strecke in Richtung auf den jeweils anderen Spannkopf vor, so dass eine Lücke zwischen den beiden Spannköpfen durch das Schellenband etwas überbrückt wird. Allerdings steht das Schellenband zwischen den beiden Spannköpfen nicht unter der Spannung, die notwendig wäre, um ein Aufwölben des Flansches nach außen zu verhindern, wenn die Schelle gespannt wird.

DE 29 19 939 A1 zeigt eine Vorrichtung zum Festspannen eines Schlauchs auf einem rohrförmigen Element, bei der die Schelle an ihren beiden Enden mit radialen Laschen zur Durchführung einer Spannschraube versehen ist. An einem Ende ist die Schelle auf ihrer Innenseite mit einer Aussparung versehen, in die ein Verlängerungsstück beim Schließen der Schelle bündig einführbar ist, so dass eine Ringfläche bei geschlossener Schelle am gesamten Umfang des Schlauchs ohne Unterbrechung anliegt.

WO 2006/109001 offenbart eine spannbare Schelle mit einem Schellenband und einem Spannkopf, der zwei in Umfangsrichtung mit einem Abstand zueinander angeordnete Spannbacken aufweist. Die Spannbacken sind durch eine Spanneinrichtung aufeinander zu bewegbar. Die beiden Spannbacken weisen weiterhin im Bereich ihrer radialen Innenseite Vorsprünge auf, die in Umfangsrichtung auf die andere Spannbacke vorstehen. Die Vorsprünge ragen in den Abstand zwischen den Spannbacken hinein.

Der Erfindung liegt die Aufgabe zugrunde, eine Rohrverbindung mit geringem Aufwand möglichst dicht ausgestalten zu können.

Diese Aufgabe wird bei einer spannbaren Schelle der eingangs genannten Art dadurch gelöst, dass die Spannbacke zumindest im Bereich des Vorsprungs aus Blech geformt ist und der Vorsprung durch eine Sicke gebildet ist, und die Spannbacken im Bereich Ihrer radialen Außenseite eine Voranschlagzone aufweisen, in der sie beim Spannen der Spanneinrichtung anfänglich zur Anlage aneinander kommen und die beim Spannen als Schwenkachse dient, um die die beiden Spannbacken aufeinander zu geschwenkt werden.

Bei dieser Ausgestaltung wird einerseits der Tatsache Rechnung getragen, dass man die Spannbacken ohne zusätzliche Maßnahme an ihrer radialen Innenseite praktisch nicht bis zu dem Durchmesser führen kann, an dem sich die Innenseite des Schellenbandes im Übrigen befindet. Eine derartige Spannbacke wird beispielsweise dadurch gebildet, dass das Schellenband halbkreisförmig nach außen gebogen wird. Wenn man nun im Bereich der radialen Innenseite der Spannbacke einen Vorsprung vorsieht, dann kann man hier einen mit der Spannbacke fest verbundenen Niederhalter vorsehen, der beim Spannen der Schelle auf das Außenrohr drückt, um es niederzuhalten und eine Aufwölbung verhindert. Dieser Vorsprung muss nicht unbedingt den gesamten Abstand überbrücken, wenngleich es von Vorteil ist, wenn der Vorsprung oder eventuell ein an der anderen Spannbacke angeordneter und in entgegengesetzte Richtung gerichteter Vorsprung dann, wenn die Spanneinrichtung gespannt ist, aneinander anliegen und somit ein Aufwölben des Außenrohres zuverlässig verhindern. Die Schelle arbeitet zufriedenstellend auch dann, wenn zwischen den Vorsprüngen ein Abstand verbleibt, wenn dieser Abstand klein genug ist, um das besagte Aufwölben des Außenrohres zu verhindern. Wenn der Vorsprung einstückig mit der Spannbacke ausgebildet ist, erleichtert es einerseits die Fertigung, weil man keine zusätzlichen Teile handhaben muss, und andererseits auch die Handhabung, weil kein Teil verloren gehen kann. Wenn die Spannbacke zumindest im Bereich des Vorsprungs aus Blech geformt ist, dann kann man die Spannbacke einteilig mit dem Schellenband ausbilden, was die Herstellung und die Handhabung erleichtert. Eine Sicke lässt sich mit geringem Aufwand leicht in das Blech einformen, so dass der Vorsprung mit einem geringen zusätzlichen Aufwand hergestellt werden kann.

Weiterhin weisen die Spannbacken im Bereich ihrer radialen Außenseite eine Voranschlagzone auf, in der sie beim Spannen der Spanneinrichtung anfänglich zur Anlage aneinander kommen. Eine derartige Voranschlagzone vergrößert die Kraft, mit der das Schellenband spannen kann. Die Spannbacken werden mit Hilfe der Spanneinrichtung zunächst soweit aneinander angenähert, dass sie im Bereich der Voranschlagzone zur Anlage aneinander kommen. Im Bereich der Voranschlagzone, also radial außen, ist also eine weitere Annäherung der Spannbacken nicht mehr möglich. Wenn die Spanneinrichtung dann weiter betätigt wird, dann dient der Berührungsbereich der beiden Spannbacken in der Voranschlagzone als Schwenkachse, um die die beiden Spannbacken aufeinander zu geschwenkt werden. Damit läßt sich die Spannkraft, mit der das Schellenband gespannt wird, mit einfachen Mitteln relativ groß machen.

Vorzugsweise ist vorgesehen, dass der Vorsprung als Fortsatz des Schellenbandes in Umfangsrichtung ausgebildet ist. Mit anderen Worten schließt die Innenseite des Vorsprungs bündig mit der Innenseite des Schellenbandes ab. Dadurch wird eine Stufe vermieden, die sich an der Innenseite der Schelle bilden könnte und in die das Material des Außenrohres ausweichen könnte. Man verlängert also die Fläche, mit der die Schelle von außen am Außenrohr anliegt.

Vorzugsweise ist die Sicke als Kufe ausgebildet, die in Umfangsrichtung verläuft. Die Kufe weist in Umfangsrichtung also eine gewisse Länge auf, mit der sie auf das Außenrohr wirken kann. Eine Kufe kann beim Spannen auf dem Außenumfang des Außenrohres gleiten, so dass das Spannen durch den Vorsprung nicht behindert wird.

Vorzugsweise weist die Spannbacke zwei Vorsprünge auf, die axial auf beiden Seiten der Spanneinrichtung angeordnet sind. Dies hat mehrere Vorteile. Zum einen kann man die Schelle beidseits der Spanneinrichtung symmetrisch abstutzen, so dass die Gefahr eines Kippens der Schelle auf dem Außenrohr klein gehalten wird. Zum anderen ist die radiale Erstreckung des Vorsprungs durch die Spanneinrichtung, beispielsweise einen Gewindebolzen, nicht oder jedenfalls nicht so stark beeinträchtigt, so dass der Vorsprung in radialer Richtung mit einer ausreichend großen Abmessung dimensioniert werden kann. Der Vorsprung kann dementsprechend stabil genug ausgebildet werden, um die Kräfte aufzubringen, die für ein Niederhalten des Außenrohres auf dem Innenrohr auch im Bereich zwischen den beiden Spannbacken erforderlich sind.

Bevorugterweise weisen die Spannbacken zusammenwirkende Vorsprünge auf, die an der gleichen axialen Position angeordnet sind. Mit anderen Worten weist jede Spannbacke mindestens einen Vorsprung auf, wobei die Vorsprünge einander gegenüberstehen. Mit dieser Ausbildung kann die verbleibende Lücke zwischen den Spannbacken besonders klein gehalten werden.

Bevorzugterweise weist das Schellenband zumindest auf einem Teil seiner Länge einen V-förmigen Querschnitt auf, dessen Scheitel radial nach innen gerichtet ist. Mit dieser Ausgestaltung kann man eine flächige Anlage der Schelle am Innenrohr erreichen, wenn man die Schelle so anordnet, dass sie das Ende des Außenrohres überlappt. In diesem Fall lässt sich der eine Schenkel des V flächig auf den Abschnitt des Innenrohres festspannen, der aus dem Außenrohr herausragt, während der andere Schenkel des V das Außenrohr auf dem Innenrohr verspannt und konisch verformt. Damit läßt sich auf einfache Weise eine Rohrverbindung realisieren, die ein erhöhtes Maß an Dichtigkeit aufweist. Man kann das Schellenband auch vollständig auf dem Außenrohr positionieren. In diesem Fall ist das Schellenband mit V-förmigem Querschnitt in der Lage, einen Teil des geschlitzten Abschnitts des Außenrohres konisch zu verformen und den verbleibenden, der Stirnseite benachbarten Teil wieder zylinderförmig zu verformen, so daß das Außenrohr in diesem Bereich flächig auf dem Umfang des Innenrohres aufliegt. Dies ergibt eine weiter verbesserte Dichtigkeit.

Hierbei ist bevorzugt, daß der Querschnitt einen Winkel im Bereich von 160° bis 176° einschließt. Das V hat also eine relativ große Öffnung.

Die Aufgabe wird bei einer Rohrverbindung dadurch gelöst, daß man die Schelle wie oben angegeben ausbildet. Das Außenrohr kann dann auf dem Innenrohr verspannt werden, ohne daß durch eine übermäßig große Aufwölbung des Außenrohres eine größere Undichtigkeit entstehen kann.

Hierbei ist bevorzugt, daß die Schlitze in Umfangsrichtung jeweils zwei Seitenwände aufweisen und mindestens ein Schlitz eine die beiden Seitenwände des Schlitzes verbindende Brücke aufweist, die sich beim Spannen in den Schlitz hinein verformt. Die Schlitze sind notwendig, damit der Innendurchmesser des Außenrohres in ausreichendem Maße verformt werden kann, um das Außenrohr auf dem Innenrohr festzuspannen. Allerdings bewirken diese Schlitze ohne weitere Maßnahmen, daß eine Undichtigkeit entsteht, durch die beispielsweise ein Gas, das durch die beiden Rohre strömt, nach außen gelangen kann. Wenn man nun in dem Schlitz eine Brücke vorsieht, also einen Steg, den man beim Erzeugen des Schlitzes stehen läßt, dann kann man die beiden Seitenwände des Schlitzes zwar zusammendrücken, um den Innendurchmesser des Außenrohres zu vermindern. Da sich die Brücke aber verformt, wenn sich die beiden Seitenwände einander annähern, und diese Verformung durch die Seitenwände einerseits und das Innenrohr und die Schelle andererseits aber praktisch nur entlang des Schlitzes erfolgen kann, bildet die Brücke eine Dichtung, mit der der Schlitz jedenfalls weitgehend verschlossen werden kann. Dies ist eine relativ einfache Maßnahme, um trotz vorhandener Schlitze die Rohrverbindung dicht zu machen.

Die Erfindung wird im folgenden anhand eines bevorzugten Ausführungsbeispiels in Verbindung mit der Zeichnung beschrieben. Hierin zeigen:
- Fig. 1: eine Vorderansicht einer spannbaren Schelle,
- Fig. 2: eine Seitenansicht der Schelle,
- Fig. 3: einen vergrößerten Schnitt III-III nach Fig. 2,
- Fig. 4: eine Ansicht X nach Fig. 3,
- Fig. 5: eine Rohrverbindung,
- Fig. 6: eine schematische Darstellung einer Rohrverbindung in ungespanntem Zustand und
- Fig. 7: die Rohrverbindung in gespanntem Zustand.

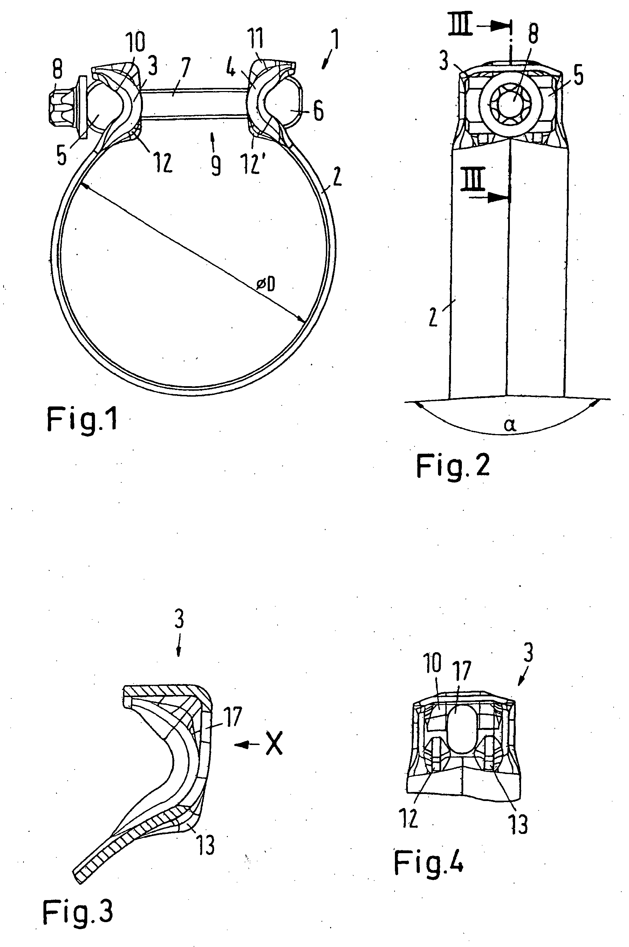

Fig. 1 zeigt eine spannbare Schelle 1 mit einem Schellenband 2, das etwa kreisförmig gebogen ist und einen Innendurchmesser D aufweist.

Das Schellenband 2 ist an jedem Ende mit jeweils einer Spannbacke 3, 4 versehen. Die Spannbacken 3, 4 sind einstückig mit dem Schellenband 2 verbunden. Das Schellenband 2 ist aus einem Metall gebildet, genauer gesagt, einem Blech. Die Spannbacken 3, 4 sind aus den Enden des Schellenbandes 2 herausgebogen.

In jeder Spannbacke 3, 4 ist ein Zylinderbolzen 5, 6 angeordnet. Eine Spannschraube 7 mit einem Schraubenkopf 8 ist durch den einen Zylinderbolzen 5 hindurchgeführt und in den anderen Zylinderbolzen 6 hineingeschraubt. Wenn die Spannschraube 7 weiter in den Zylinderbolzen 6 hineingeschraubt wird, wird ein Abstand zwischen den beiden Spannbacken 3, 4 vermindert. Dadurch wird auch die Innendurchmesser D des Schellenbandes 2 vermindert. Die Spannschraube 7 kann so weit angezogen werden, daß die Spannbacken 3, 4 auf Block gezogen werden, also aneinander anliegen.

Im ungespannten Zustand, der in Fig. 1 dargestellt ist, weisen die Spannbacken 3, 4 in Umfangsrichtung des Schellenbandes 2 einen Abstand 9 zueinander auf. Wenn die Spannschraube 7, die hier eine Spanneinrichtung bildet, verdreht wird, dann nähern sich die beiden Spannbacken 3, 4 aneinander an und kommen in einer Voranschlagzone 10, 11 aneinander zur Anlage. Bei weiterer Betätigung der Spannschraube 7 dient dann die Voranschlagzone 10, 11 als Drehachse, um die die beiden Spannbacken 3, 4 aufeinander zu verschwenkt werden.

Aufgrund der Tatsache, daß die Spannbacken 3, 4 praktisch kreisförmig aus dem Schellenband 2 herausgebogen sind, verbleibt im radial inneren Abschnitt zwischen den Spannbacken 3, 4 auch im gespannten Zustand der Schelle eine Lücke, die unerwünscht ist. Eine Abhilfe wird im folgenden beschrieben.

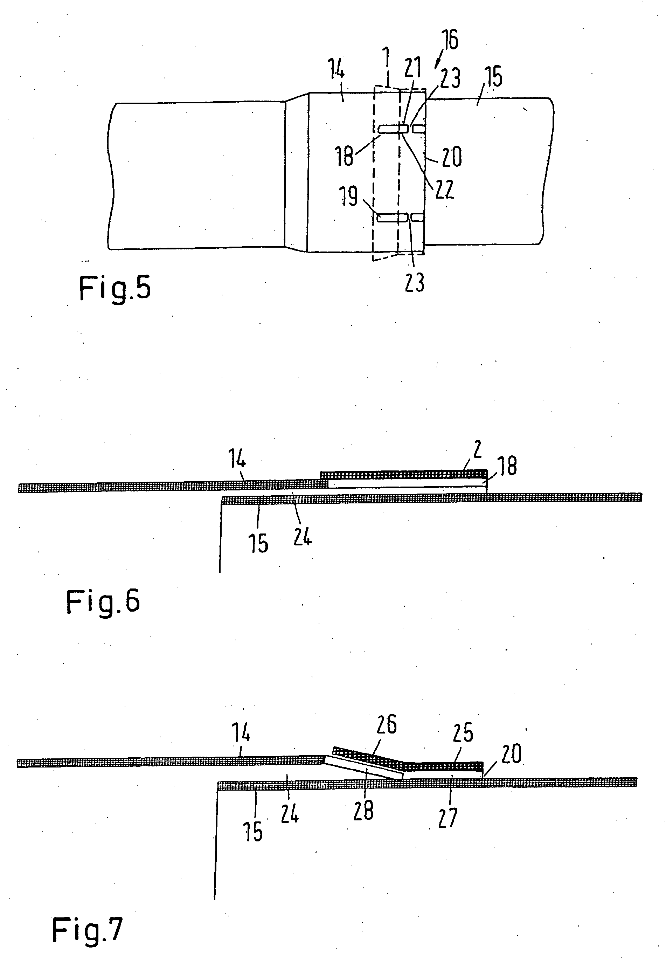

An ihrer radialen Innenseite ist jede Spannbacke 3, 4 mit zwei Vorsprüngen 12, 13 versehen. Die Vorsprünge 12, 13 setzen die Innenwand des Schellenbandes 2 in Umfangsrichtung fort. Da die Spannbacken 3, 4 aus Blech geformt sind, können die Vorsprünge 12, 13 durch eine als Kufe ausgebildete Sicke gebildet sein, wobei die Kufe in Umfangsrichtung verläuft. Die Vorsprünge 12, 13 an der Spannbacke 3 und die entsprechenden Vorsprünge 12' an der Spannbacke 4 bewegen sich dann beim Annähern der Spannbacke 3, 4 ebenfalls aufeinander zu und bewirken, daß dann, wenn die beiden Spannbacken 3, 4 auf Block gespannt sind, jedenfalls zwischen den Vorsprüngen 12, 12' bzw. 13 und dem entsprechenden Gegenvorsprung keine Lücke mehr besteht bzw. die Lücke so klein ist, daß sich ein Teil eines Außenrohres 14, das auf ein Innenrohr 15 aufgeschoben ist (Fig. 5) nicht radial nach außen wölben kann. Damit wird verhindert, daß zwischen dem Außenrohr 14 und dem Innenrohr 15 ein Spalt entsteht, der eine Rohrverbindung 16 (Fig. 5) undicht macht.

Die beiden Vorsprünge 12, 13 sind in Axialrichtung der Schelle (das ist die Richtung, die auf der Zeichenebene der Fig. 2 senkrecht steht) beidseits der Spannschraube 7 angeordnet, also beidseits einer Öffnung 17, durch die die Spannschraube 7 geführt ist. Damit ist es möglich, die beiden Vorsprünge 12, 13 in radialer Richtung (das ist die Richtung des Durchmessers D) mit der Öffnung 17 überlappen zu lassen, so daß die radiale Erstreckung der Vorsprünge 12, 13 durch die Spannschraube 7 nicht oder nur in Maßen begrenzt ist. Die Vorsprünge 12, 12' liegen in Axialrichtung an der gleichen Position, also einander gegenüber. Im Idealfall stoßen die Vorsprünge 12, 12' jedenfalls fast aneinander an, wenn die Schelle 1 auf Block gespannt ist.

Fig. 5 zeigt die Rohrverbindung 16 mit dem Innenrohr 15, das in das Außenrohr 14 eingesteckt ist. Das Außenrohr 14 kann dabei, wie dargestellt, mit einer Durchmesservergrößerung versehen sein. Es ist aber auch möglich, das gesamte Außenrohr 14 mit einem Innendurchmesser auszubilden, der auf den Außendurchmesser des Innenrohrs 15 abgestimmt ist.

Die Schelle 1 ist nur schematisch und strichliert dargestellt.

Damit das Außenrohr 14 auf dem Innenrohr 15 verspannt werden kann, weist das Außenrohr 14 zwei Schlitze 18, 19 auf, die von einer Stirnseite 14 des Außenrohres 14 ausgehen. Die beiden Schlitze 18, 19 sind in Umfangsrichtung des Außenrohres 14 um etwa 90° zueinander versetzt angeordnet.

Jeder Schlitz 18, 19 weist zwei Seitenwände 21, 22 auf, wobei die Seitenwände 21, 22 beispielsweise in axialer Richtung verlaufen können. Die beiden Seitenwände 21, 22 sind durch eine Brücke 23 miteinander verbunden. Diese Brücke 23 kann man beim Ausstanzen der Schlitze 18, 19 einfach stehen lassen. Gegebenenfalls kann diese Brücke 23 in Axialrichtung eine Wölbung aufweisen, wobei es unerheblich ist, in welche Richtung diese Wölbung gerichtet ist.

Wenn nun die Schelle 1 zusammengezogen wird, dann wird die Breite der Schlitze 18, 19 in Umfangsrichtung vermindert. Dabei verformt sich die Brücke 23. Das Material der Brücke 23 kann aber weder radial nach innen ausweichen, weil dort das Innenrohr 15 angeordnet ist, noch radial nach außen, weil sich dort das Schellenband 2 der Schelle 1 befindet. Dementsprechend kann es nur innerhalb des Schlitzes 18, 19 fließen. Die Brücke 23 bildet dann eine Art Dichtung oder Verschlußstück, mit der die Schlitze 18, 19 verschlossen werden, so daß die Schlitze 18, 19 verschlossen werden oder verschlossen bleiben, so daß die Schlitze 18, 9 nicht zu einer Undichtigkeit der Rohrverbindung 16 beitragen können.

Wie insbesondere aus Fig. 2 hervorgeht, hat das Schellenband 2 einen V-förmigen Querschnitt zumindest auf einem Teil eines Umfangs, vorzugsweise aber auf der gesamten Länge des Schellenbandes. Das V schließt einen relativ großen Winkel α ein. Dieser kann im Bereich von 160° bis 176° liegen. Die Wirkungsweise dieses Querschnitts soll anhand der Fig. 6 und 7 erläutert werden.

Die Fig. 6 und 7 zeigen schematisch das Außenrohr 14 und das Innenrohr 15 mit einem Spiel 24. Dieses Spiel 24 kann durchaus eine Größenordnung von 1 bis 2 mm haben. Es ist einerseits durch Fertigungstoleranzen bedingt. Andererseits erleichtert dieses Spiel 24 aber auch das Einstecken des Innenrohres 15 in das Außenrohr 14.

Durch Spannen des Schellenbandes 2 soll nun das Außenrohr 14 im Bereich des Schellenbandes 2 so verformt werden, daß es möglichst dicht am Außenumfang des Innenrohres 15 anliegt. Dies läßt sich durch den V-förmigen Querschnitt des Schellenbandes 2 mit einfachen Mitteln realisieren. Dargestellt ist das Außenrohr 14 im Bereich des Schlitzes 18, allerdings ohne die Brücke 23, um die Übersicht nicht zu erschweren.

Wenn das Schellenband 2 gespannt wird, dann bleibt ein Schenkel 25 des V-förmigen Querschnitts parallel zur Umfangsfläche des Außenrohres 15, während der andere Schenkel 26 des V-förmigen Querschnitts einen Konus bildet. Dementsprechend wird auch das Außenrohr 14 in einem Abschnitt 27, der von der Stirnseite 20 ausgeht, etwa zylindermantelförmig verformt, während ein axial weiter von der Stirnseite 20 entfernter Abschnitt 28 konusartig verformt wird. Der Winkel, den dieser Abschnitt 28 mit der Umfangswand bildet, ist zwar steiler, als wenn der gesamte vom Schellenband 2 abgedeckte Bereich zusammengezogen würde. Dies ist aber unerheblich, weil der Abschnitt 27 flächig am Umfang des Innenrohrs 15 anliegen kann und so zu einer verbesserten Dichtung führt.

## Patentansprüche

1. Spannbare Schelle mit einem Schellenband und einem Spannkopf, der zwei in Umfangsrichtung mit einem Abstand zueinander angeordnete Spannbacken aufweist, die durch eine Spanneinrichtung aufeinander zu bewegbar sind, wobei mindestens eine Spannbacke (3, 4) im Bereich ihrer radialen Innenseite mindestens einen in Umfangsrichtung auf die andere Spannbacke (4, 3) vorstehenden Vorsprung (12, 13; 12') aufweist, der in den Abstand (9) hineinragt, wobei der Vorsprung (12, 13; 12') einstückig mit der Spannbacke (3, 4) ausgebildet ist, **dadurch gekennzeichnet, dass** die Spannbacke (3, 4) zumindest im Bereich des Vorsprungs (12, 13; 12') aus Blech geformt ist und der Vorsprung (12, 13; 12') durch eine Sicke gebildet ist, und wobei die Spannbacken (3, 4) im Bereich Ihrer radialen Außenseite eine Voranschlagzone (10, 11) aufweisen, in der sie beim Spannen der Spanneinrichtung (7) anfänglich zur Anlage aneinander kommen und die beim Spannen als Schwenkachse dient, um die die beiden Spannbacken (3, 4) aufeinander zu geschwenkt werden.

2. Schelle nach Anspruch 1, **dadurch gekennzeichnet, dass** der Vorsprung (12, 13; 12') als Fortsatz des Schellenbandes (2) in Umfangsrichtung ausgebildet ist.

3. Schelle nach Anspruch 1 oder 2, **dadurch gekennzeichnet, dass** die Sicke als Kufe ausgebildet ist, die in Umfangsrichtung verläuft.

4. Schelle nach einem der Ansprüche 1 bis 3, **dadurch gekennzeichnet, dass** die Spannbacke (3, 4) zwei Vorsprünge (12, 13; 12') aufweist, die axial auf beiden Seiten der Spanneinrichtung angeordnet sind.

5. Schelle nach einem der Ansprüche 1 bis 4, **dadurch gekennzeichnet, dass** die Spannbacken (3, 4) zusammenwirkende Vorsprünge (12, 12') auf weisen, die an der gleichen axialen Position angeordnet sind.

6. Schelle nach einem der Ansprüche 1 bis 5, **dadurch gekennzeichnet, dass** das Schellenband (2) zumindest auf einem Teil seiner Länge einen V-förmigen Querschnitt aufweist, dessen Scheitel radial nach innen gerichtet ist.

7. Schelle nach Anspruch 6, **dadurch gekennzeichnet, dass** der Querschnitt einen Winkel α im Bereich von 160° bis 176° einschließt. Das V hat eine relativ große Öffnung.

8. Rohrverbindung mit einem Innenrohr, das in ein Außenrohr eingesteckt ist, und einer Schelle, die auf das Außenrohr gespannt ist, wobei das Außenrohr mindestens zwei von seiner Stirnseite ausgehende Schlitze aufweist, **dadurch gekennzeichnet, dass** die Schelle als spannbare Schelle nach einem der Ansprüche 1 bis 7 wie oben angegeben ausbildet ist.

9. Rohrverbindung nach Anspruch 8, **dadurch gekennzeichnet, dass** die Schlitze (18, 19) in Umfangsrichtung jeweils zwei Seitenwände (21, 22) aufweisen und mindestens ein Schlitz (18, 19) eine die beiden Seitenwände 21, 22 des Schlitzes (18, 19) verbindende Brücke (23) aufweist, die sich beim Spannen in den Schlitz (18, 19) hinein verformt.

## Claims

1. Tightenable clamp comprising a clamping band and a tightening head which comprises two clamping jaws arranged at a spacing from one another in the circumferential direction and which can be moved towards each other by a tightening device, wherein at least one clamping jaw (3, 4) comprises, in the region of its radially inner surface, at least one projection (12, 13; 12') which extends towards the other clamping jaw (4, 3) in the circumferential direction and projects into the gap (9), the projection (12, 13; 12') being formed in one piece with the clamping jaw (3, 4), **characterised in that** the clamping jaw (3, 4) is formed from sheet metal at least in the region of the projection (12, 13; 12') and the projection (12, 13; 12') is formed by a bead, and wherein the clamping jaws (3, 4) comprise, in the region of their radially outer surface, an initial contact zone (10, 11) in which they initially come into contact with one another when the tightening device (7) is tightened and which serves, during the tightening, as a pivot axis about which the two clamping jaws (3, 4) are pivoted towards each other.

2. Clamp according to claim 1, **characterised in that** the projection (12, 13; 12') is configured as an extension of the clamping band (2) in the circumferential direction.

3. Clamp according to claim 1 or 2, **characterised in that** the bead is configured as a runner which extends in the circumferential direction.

4. Clamp according to one of claims 1 to 3, **characterised in that** the clamping jaw (3, 4) comprises two projections (12, 13; 12') which are arranged axially on both sides of the tightening device.

5. Clamp according to one of claims 1 to 4, **characterised in that** the clamping jaws (3, 4) comprise cooperating projections (12, 12') which are arranged at the same axial position.

6. Clamp according to one of claims 1 to 5, **characterised in that** the clamping band (2) has, over at least part of its length, a V-shaped cross-section the apex of which is directed radially inwards.

7. Clamp according to claim 6, **characterised in that** the cross-section encloses an angle α in the range from 160 to 176°. The V has a relatively large opening.

8. Pipe connection having an inner pipe inserted into an outer pipe, and a clamp which is tightened onto the outer pipe, the outer pipe comprising at least two slots proceeding from an end face thereof, **characterised in that** the clamp is configured as a tightenable clamp according to one of claims 1 to 7 as stated hereinbefore.

9. Pipe connection according to claim 8, **characterised in that** the slots (18, 19) each comprise two side walls (21, 22) in the circumferential direction and at least one slot (18, 19) comprises a bridge (23) connecting the two side walls 21, 22 of the sot (18, 19) which is deformed into the slot (18, 19) during tightening.

## Revendications

1. Etrier resserrable avec une bande d'étrier et une tête de serrage qui présente deux mâchoires de serrage agencées dans le sens périphérique avec un espacement l'une de l'autre et pouvant se déplacer par un dispositif de serrage l'une vers l'autre, au moins une mâchoire de serrage (3, 4) présentant, dans la zone de son côté intérieur radial, au moins une saillie (12, 13 ; 12') dépassant dans le sens périphérique sur l'autre mâchoire de serrage (4, 3), laquelle saillie pénètre dans l'espacement (9), la saillie (12, 13 ; 12') étant formée d'un seul tenant avec la mâchoire de serrage (3, 4), **caractérisé en ce que** la mâchoire de serrage (3, 4) est constituée de tôle au moins dans la zone de la saillie (12, 13 ; 12') et la saillie (12, 13 ; 12') est formée par une moulure, et les mâchoires de serrage (3, 4) présentant dans la zone de leur côté extérieur radial une zone de prébutée (10, 11), dans laquelle elles viennent en appui l'une contre l'autre initialement lors du serrage du dispositif de serrage (7) et qui sert, lors du serrage, d'axe de pivotement, autour duquel les deux mâchoires de serrage (3, 4) sont pivotées l'une vers l'autre.

2. Etrier selon la revendication 1, **caractérisé en ce que** la saillie (12, 13 ; 12') est réalisée en prolongement de la bande d'étrier (2) dans le sens périphérique.

3. Etrier selon la revendication 1 ou 2, **caractérisé en ce que** la moulure est réalisée comme un patin qui s'étend dans le sens périphérique.

4. Etrier selon l'une quelconque des revendications 1 à 3, **caractérisé en ce que** la mâchoire de serrage (3, 4) présente deux saillies (12, 13 ; 12') qui sont agencées axialement sur les deux côtés du dispositif de serrage.

5. Etrier selon l'une quelconque des revendications 1 à 4, **caractérisé en ce que** les mâchoires de serrage (3, 4) présentent des saillies concourantes (12, 12') qui sont agencées dans la même position axiale.

6. Etrier selon l'une quelconque des revendications 1 à 5, **caractérisé en ce que** la bande d'étrier (2) présente au moins sur une partie de sa longueur une section en forme de V, dont le sommet est dirigé radialement vers l'intérieur.

7. Etrier selon la revendication 6, **caractérisé en ce que** la section forme un angle α dans la plage de 160° à 176°. Le V présente une ouverture relativement grande.

8. Raccord de tube avec un tube intérieur qui est enfiché dans un tube extérieur et un étrier qui est serré sur le tube extérieur, le tube extérieur présentant au moins deux fentes sortant de son côté frontal, **caractérisé en ce que** l'étrier est réalisé comme un étrier resserrable selon l'une quelconque des revendications 1 à 7 comme indiqué plus haut.

9. Raccord de tube selon la revendication 8, **caractérisé en ce que** les fentes (18, 19) présentent dans le sens périphérique respectivement deux parois latérales (21, 22) et **en ce qu'**au moins une fente (18, 19) présente un pont (23) reliant les deux parois latérales (21, 22) de la fente (18, 19), lequel se déforme lors du serrage dans la fente (18, 19).
